(19) Europäisches Patentamt

European Patent Office

Office européen des brevets

(11) **EP 3 394 989 B1**

(12) **EUROPEAN PATENT SPECIFICATION**

(45) Date of publication and mention
of the grant of the patent:
**10.06.2020 Bulletin 2020/24**

(21) Application number: **16828781.1**

(22) Date of filing: **22.12.2016**

(51) Int Cl.:
**H04B 7/04** *(2017.01)*

(86) International application number:
**PCT/IB2016/057916**

(87) International publication number:
**WO 2017/109739 (29.06.2017 Gazette 2017/26)**

(54) **DEVICE AND SYSTEM FOR THE RADIO COMMUNICATION WITH MIMO PROTOCOL**

VORRICHTUNG UND SYSTEM ZUR FUNKKOMMUNIKATION MIT MIMO-PROTOKOLL

DISPOSITIF ET SYSTÈME POUR UNE COMMUNICATION RADIOÉLECTRIQUE AVEC UN PROTOCOLE MIMO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2015 IT UB20159483**

(43) Date of publication of application:
**31.10.2018 Bulletin 2018/44**

(73) Proprietor: **Ferrari, Miki
42030 Vezzano sul Crostolo (RE) (IT)**

(72) Inventor: **Ferrari, Miki
42030 Vezzano sul Crostolo (RE) (IT)**

(74) Representative: **Brunacci, Marco
BRUNACCI & PARTNERS S.r.l.
Via Scaglia Est, 19-31
41126 Modena (IT)**

(56) References cited:
**EP-A1- 1 768 284     WO-A1-2005/057870
US-A1- 2003 050 020    US-B1- 8 374 273**

**Description**

Technical Field

The present invention relates to a device and system for the radio communication with MIMO protocol.

Background Art

In the particular field of radio communication, the use is known of the communication standard 802.11n which permits operating around the frequencies of 2.4 GHz and 5 GHz at a transmission speed of around 300Mb/s. The 802.11n standard permits the use of MIMO ("Multiple Input Multiple Output") technology.

In particular, MIMO technology permits using a multiplicity of antennas for transmitting and a multiplicity of antennas for receiving, thus increasing the supply of data rates and improving the BER ("Bit Error Rate"), using a multiplexing of spatial type which enables the user to make use of a better service.

In particular, MIMO technology permits exploiting multi-path propagation, thereby improving the performance of broad-band radio links in propagation environments affected by multiple paths, due to the presence of buildings or objects which cause the reflection of the signals.

In the case of wireless transmission systems, the radio communication systems with MIMO protocol use arrays of multiple antennas both for transmission and for reception and the relations between the input signals and the output signals are represented by a channel matrix which comprises all the possible courses of the paths of the signals between the transmission antennas and the receiver antennas.

The radio channel comprises the propagation environment, the transmission and receiving devices and the processing circuit connected to the devices themselves.

In the MIMO systems each receiver antenna receives the signals transmitted by each transmission antenna and the communication channel can be represented by an NRxNT matrix, where by NR is meant the number of receiver antennas and by NT the number of transmission antennas, wherein the matrix elements correspond to the impulse response of the low-pass equivalent for each combination of transmission and receiver antennas.

The input-output relation of a SISO ("Single Input Single Output") system can be written as:

$$y(t) = h(t) \otimes x(t) + n(t)$$

Where y(t), x(t) and n(t) are a realization of a random process which represent the signal received, the signal transmitted and the noise, respectively.

Fixing an instant of sampling kt, the input-output relation becomes:

$$y_k = h_k x_k + n_k$$

Where $y_k$, $x_k$ and $n_k$ are random variables.

The channel, generally, is a random process and consequently $h_k$ is also a random variable, but if the channel varies slowly over time, then $h_k$ can be deemed constant at any instant k in which the channel is constant.

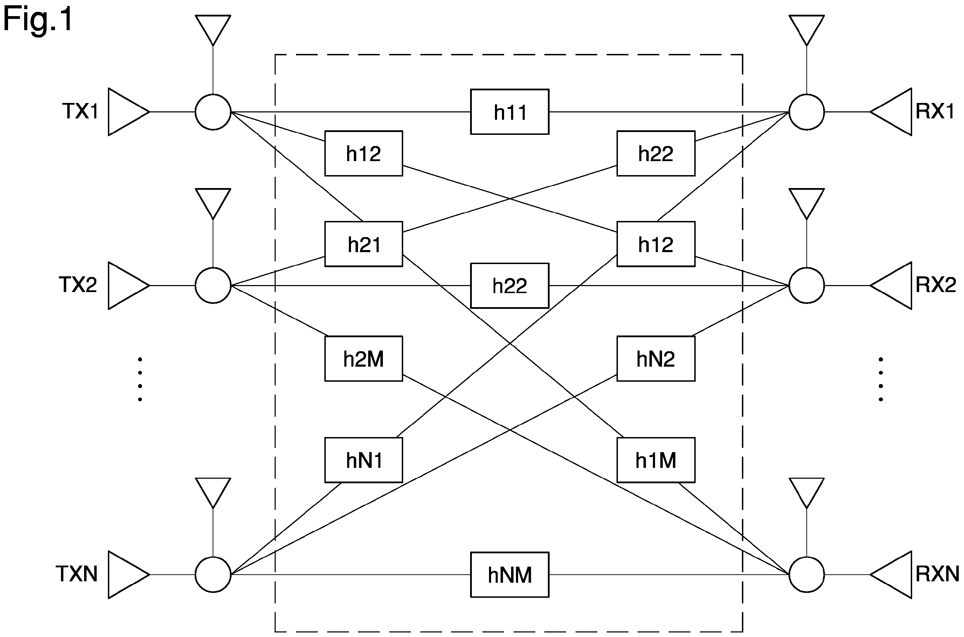

Considering a radio communication system with narrow-band MIMO protocol, schematically shown in figure 1, in a generic instant the input-output relation can be written as:

$$\overline{y} = \overline{\overline{H}} \times \overline{x} + \overline{n}$$

where y represents the vector of the received signals (having dimension N), x represents the vector of the transmitted signals (dimension M), n represents the vector containing the noise samples (dimension N) and H represents the matrix (dimension NxM) of the impulse responses or channel matrix and can be written as:

$$\left[ \begin{pmatrix} h_{11} & \cdots & h_{1M} \\ \vdots & \ddots & \vdots \\ h_{N1} & \cdots & h_{NM} \end{pmatrix} \right]$$

The input-output relations can be written in the following way:

$$y_i = \sum_{J=1}^{M} h_{ij}\, x_j + n_i;\, i = 1, 2, \dots N$$

wherein the generic element hij represents the complex channel coefficient between the j-th transmitter and the i-th receiver.

The signal transmitted by each of the transmission antennas reaches each of the receiver antennas, affecting however the signal of each receiver antenna.

Such behaviour is caused by the multi-path propagation and by the presence of the "fading" phenomenon, i.e., a form of distortion of a signal which reaches destination in the form of a certain number of replicas delayed over time. Considering the MIMO transfer functions in the case of a model in "time diversity" and "spatial diversity", each coefficient hij is reduced to linear combination of attenuation and delay of the initial signal.

In this respect, it is pointed out that, within the scope of the present treatise, by the term "time diversity" is meant the particular technique for reducing the fading phenomenon wherein copies of the signal are transmitted over time by means of the use of channel coding techniques which combine with the time delays introduced between the various replicas of the transmitted signal. In such case, to obtain a correct behavior, the time distance between the signal replicas must be greater than the channel coherence time.

At the same time, by the term "spatial diversity" shall be meant the technique for the reduction of the fading phenomenon wherein the replicas of each transmitted signal are received by different receiver antennas placed at a distance greater than the length of coherence.

Introducing the multi-path concept and considering the terms $y_k$ as the summation of the delayed and attenuated copies of the various input signals $x_k$, the coefficients hij of the matrix H appear modelled in first approximation as follows:

$$h_{ij} = h_0 \sum_{n=1}^{\infty} a(n)_{ij}\, e^{-j\omega T(n)_{ij}};\, i = 1, 2, \dots N, j = 1, 2, \dots M$$

In the particular field of new-generation mobile radio communication systems, LTE (Long Term Evolution) and LTE-Advanced communication standards are used, which make use of transmission patterns with MIMO protocol to improve performance and achieve high data transmission speeds.

Such systems, particularly in the field of indoor communication, have as their main drawback the fact that they have difficulty in achieving high radio transmission performance levels due to the insufficient level of signal/noise ratios in the particular service area in which the mobile users are located.

To overcome such drawbacks, the use is known of DAS (Distributed Antenna System) technology whereby a plurality of mutually spatially-distanced antennas are connected to a common source, by means of a means of transport, through which the transmission of the signals inside a determinate area occurs. DAS technology permits extending and improving the coverage provided to the user through the use of the radio communication systems with MIMO protocol. The combination of MIMO and DAS technologies in indoor environments permits exploiting the possibility of suitably distributing the Remote Antenna Units (RAU) in space.

In order to ensure good performance, the antennas of the different RAUs must be arranged in space in an "interleaved" manner, i.e., as interlinked as possible the one with the other.

In other words, in an interleaved-MIMO DAS (I-MIMO DAS) system, the elements of the arrays of antennas in transmission must be sufficiently set apart the one from the other to allow different propagation conditions, but at the same time must be sufficiently close to allow a considerable overlapping of the coverage areas to be able to use all the signals coming from the different branches of the MIMO system.

The major drawback of such systems for interleaved-MIMO-DAS radio communication is tied to the need to introduce a redundancy of antennas interlinked the one with the other involving, however, the onset of pluralities of distributions of the signals emitted by the transmission antennas to the receiver antennas which affect the signals of the receiver antennas themselves.

In the outdoor scenario, the use is known, e.g., of radio communication systems of the SISO (Single Input Single Output) type between point-to-point or point-to-multipoint radio links or of systems of the MIMO 2x2 type realizable with dual-polarity single antenna.

The major drawback of such systems is tied to the fact of having a considerable complexity of physical connection between the various antennas and the radio links.

Document EP 1 768 284 A1 describes a MIMO (Multiple Input Multiple Output) channel emulator with a transmission matrix or a radio transmission matrix emulator equipment for the measurement of multiple transmitting antennae and multiple receiving antennae radio transceiver equipment.

Document US 8 374 273 B1 discloses a rake receiver having a plurality of rake fingers and based on a plurality of received signals.

Description of the Invention

The main object of the present invention is to provide a device and system for the radio communication with MIMO protocol which allows reducing the structural and operational complexity in radio communication between one or more transmission antennas and one or more receiver antennas both in indoor and outdoor environments, and therefore simple installation and interconnection between the antennas themselves.

Another object of the present invention is to provide a device and system for the radio communication with MIMO protocol which allows to overcome the mentioned drawbacks of the prior art within the ambit of a simple, rational, easy, effective to use and affordable solution.

The above mentioned objects are achieved by the present device and system for the radio communication with MIMO protocol having the characteristics of claims 1, 2 and 3, respectively.

Brief Description of the Drawings

Other characteristics and advantages of the present invention will become better evident from the description of a preferred, but not exclusive, embodiment of a device and system for the radio communication with MIMO protocol, illustrated by way of an indicative, but non-limiting, example in the accompanying drawings, wherein:

Figure 1 is a general block diagram of a system for the radio communication with MIMO protocol between a plurality of transmission antennas and a plurality of receiver antennas;
Figure 2 is a general block diagram of a device according to the invention;
Figure 3 is a block diagram showing in detail the processing means of the device of Figure 2;
Figure 4 is a general block diagram of a device according to the invention;
Figure 5 is a block diagram showing in detail the processing means of the device of Figure 4;
Figure 6 is a general block diagram of a system according to the invention;
Figure 7 is a block diagram showing in detail the devices of the system of Figure 6;
Figure 8 is a block diagram showing in detail the devices of the system of Figure 6 in an alternative embodiment.

Embodiments of the Invention

The MISO device 1 for the radio communication with MIMO protocol is adapted to the communication between a plurality of transceiver antennas 2 of radio frequency signals and a single transceiver antenna 3 of the radio frequency signals themselves.

Within the scope of the present treatise, by MISO (Multiple Input Single Output) is meant the particular radio communication sub-system with MIMO protocol for communicating radio frequency signals over the air between a plurality of transceiver antennas and a single transceiver antenna.

According to the invention, the device 1 comprises:

- a plurality of input ports 4 operatively connectable to the plurality of transceiver antennas 2. More in detail, each of the transceiver antennas 2 is connected to each respective input port 4;
- an output port 5 operatively connectable to an output antenna 6 adapted to communicate with the single transceiver antenna 3. Preferably, the output port 5 is made of a suitable connector which allows the physical connection to the output antenna 6;
- processing means 7 operatively connected to the input ports 4 and to the output port 5 and adapted to process the radio frequency signals coming from the plurality of transceiver antennas 2 to obtain a single output signal adapted to be transmitted from the output antenna 6 towards the single transceiver antenna 3.

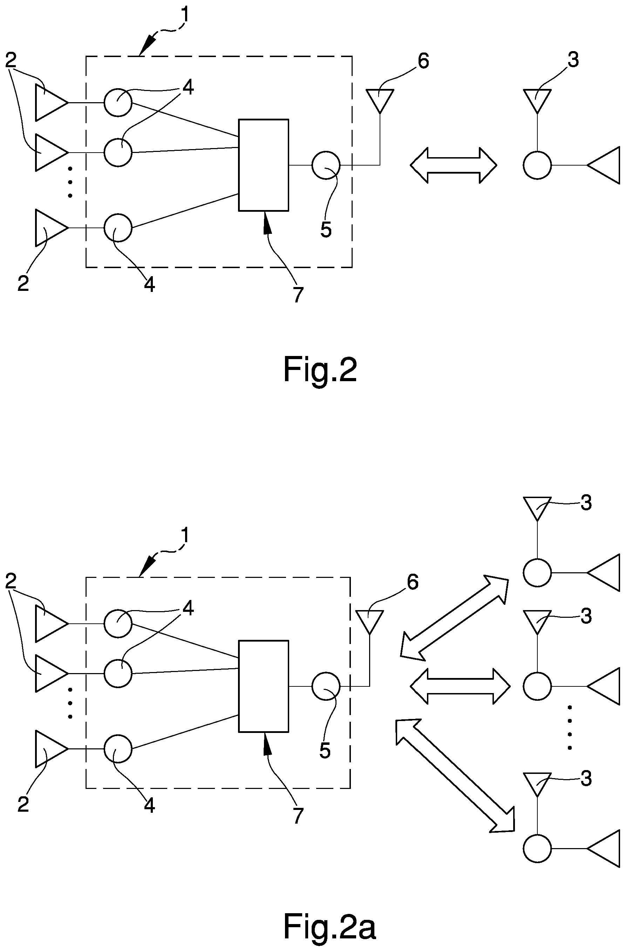

An alternative embodiment cannot however be ruled out shown in Figure 2a, wherein each of the input ports 4 of the device 1 are operatively connected to a plurality of transceiver antennas 2, while the output antenna 6, operatively connected to the output port 5, communicates over the air with a plurality of transceiver antennas 3.

The processing means 7 comprise dividing means 8 operatively connected to each of the input ports 4 and adapted to divide each of the radio frequency signals coming from each of the transceiver antennas 2 into a plurality of replicas of the radio frequency signals.

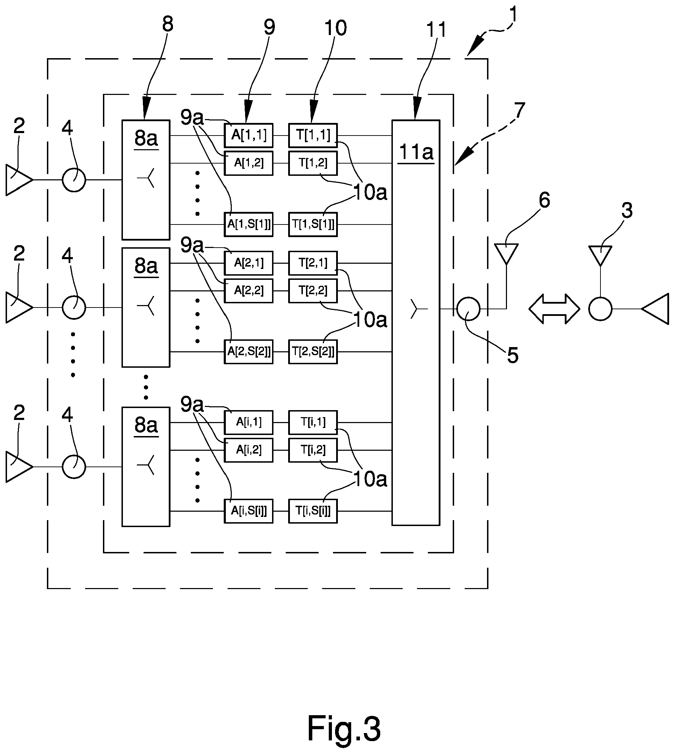

In the preferred embodiment shown in Figure 3, the dividing means 8 comprise a plurality of dividing units 8a each of which is operatively connected to each of the input ports 4, respectively.

More in detail, each of the dividing units 8a is of the type of a "power splitter" adapted to split the power of the radio frequency signals transmitted by each transmission antenna 2 into a number of replicas of each of the radio frequency signals.

The number of replicas of each of the radio frequency signals coincides with the number of transceiver antennas 2 which are operatively connected to the input ports of the device 1.

Usefully, the processing means 7 comprise:

- attenuator means 9 operatively connected to the dividing means 8 and adapted to attenuate the intensity of the signal of each of the replicas. In the preferred embodiment shown in the figures, the attenuator means 9 comprise a plurality of attenuator units 9a, each of which is operatively connected to the respective dividing unit 8a and is adapted to attenuate the intensity of the signal of each of the replicas; and
- retarding means 10 operatively connected to the attenuator means 9 and adapted to introduce a delay time to the signal of each of the replicas. More in detail, the retarding means 10 comprise a plurality of retarding units 10a, each of which is operatively connected to the respective attenuator unit 9a and is adapted to introduce a different delay time to the signals of each of the replicas.

Alternative embodiments cannot however be ruled out wherein the attenuation of the signals and the delay time of the replicas of the radio frequency signals are done by means of processing means of different type.

Within the scope of the present treatise, the attenuator means 9 and the retarding means 10 of each of the replicas of the radio frequency signals transmitted by the plurality of transceiver antennas 2 are adapted to the introduction of an attenuation, and delay related to it, which is characteristic to each single replica of each of the radio frequency signals.

Each of the replicas can be expressed with the equation:

$$ w[i] = \sum_{n[i]=1}^{S[i]} A\big[i, n[i]\big]\, T\big[i, n[i]\big]; S[i] \to \infty $$

where:

$$ A\big[i, n[i]\big] = Aw(n)_i; con\ i = 1, \dots, N; $$

$$ T\big[i, n[i]\big] = e^{-j\omega Tw(n)_i}; con\ i = 1, \dots, N; $$

wherein:

$$ A\big[i, n[i]\big] \in [-\infty; 0];\ T\big[i, n[i]\big] \in [0; +\infty];\ S[i] \in [1; +\infty] $$

In particular, the term $Tw(n)_i$ represents a delay expressible as a multiple of the wave length $\lambda$:

$Tw(n)_i = \dfrac{nM_i\lambda}{c}$, wherein $M_i$ is a multiplicative suitably chosen and dependent on the single input signal at the i-th input port 4 connected to the respective i-th transceiver antenna 2.

We therefore obtain:

$A[i,n[i]] = Aw(n)_i$, which represents a linear and variable attenuation on the single n-th path of each attenuator unit 9a; and $T\big[i, n[i]\big] = e^{-j\omega \frac{nM_i\lambda}{c}}$,

which represents a delay in accordance with the variable wave length $\lambda$ on the single n-th path of each retarding unit 10a.

By means of the dividing means 8 S[i]-th replicas are obtained of each of the radio frequency input signals, wherein each replica is suitably attenuated and delayed by means of the respective attenuator units 9a and retarding units 10a to obtain the attenuated and delayed radio frequency signals w[i], so as to best simulate the channel.

By making an increasingly higher number of replicas for each branch, i.e., assuming S[i] tending to infinity, a model is obtained which is increasingly similar to the real channel.

Assuming as significant only the contributions closer to the direct path, it is possible to assume S[i] equal to a number of units.

The processing means 7 comprise recombining means 11 operatively connected to the retarding means 10 and to the output port 5 and adapted to recombine the replicas of each of the attenuated and delayed radio frequency signals. Preferably, the recombining means 11 comprise a single recombining unit 11a having a plurality of inputs operatively connected to each retarding unit 10a. More in detail, the recombining unit 11a is of the type of a "power combiner" adapted to couple the powers of the replicas of the attenuated and delayed radio frequency signals w[i] to obtain a single radio frequency output signal which is then transmitted to the output antenna 6, which is, in turn, adapted to communicate with the single transceiver antenna 3.

Alternative embodiments cannot however be ruled out wherein the processing means 7 are adapted to process the radio frequency signals coming from the single transceiver antenna 3 by means of the output antenna 6 to obtain a plurality of output signals adapted to be transmitted by the output antenna itself towards the plurality of transceiver antennas 2.

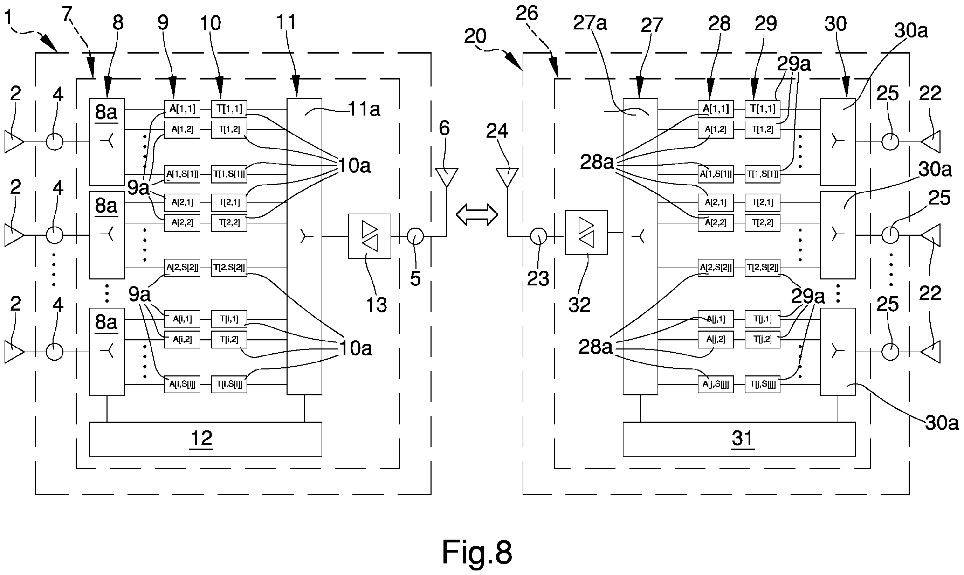

Such device 1 may be passive, i.e. without its own power supply and have variable insertion losses depending on the number of transceiver antennas 3. An alternative embodiment cannot however be ruled out shown in Figure 8 wherein the device 1 is active, i.e., has its own power supply and permits eliminating the insertion losses and obtaining a greater unit gain.

To eliminate such insertion losses introduced by the dividing unit 8a and by the recombining unit 11a, the dividing unit and the recombining unit themselves must switch in a high-frequency synchronous way on the different branches by means, e.g., of a high-frequency micro switch.

In particular, the dividing units 8a must produce a sampled replica of the input signal $x_k$ on the various attenuator units 9a and retarding units 10a.

Similarly, the recombining unit 11a, e.g., of the type of a high-frequency micro switch and a low-pass and/or band-pass filter connected in cascade to the micro switch, must recombine the attenuated and delayed contributions on the various branches in a synchronized way with respect to the dividing units 8a.

Usefully, the device 1 comprises a control device 12 operatively connected to the dividing units 8a and to the recombining units 11a to synchronize the dividing unit itself and the recombining units themselves, taking into account the delay times introduced by the phasors on the various branches.

Preferably, the control device 12 is of the micro controller type.

The switching frequency, or the sampling frequency $f_c$, is determined by the bandwidth B characteristic to each single signal $x_k(t)$ on the basis of the principle of Nyquist according to which:

$$f_c > 2B$$

Usefully, the device 1 comprises an amplifier device 13, connected in cascade to the recombining unit 11a adapted to provide an alternate amplification to the output signals inasmuch as without frequency duplexing.

Preferably, the amplifier device 13 is of the type of a bi-directional amplifier. The present invention also relates to the SIMO device 20 for the radio communication with MIMO protocol between a single transceiver antenna 21 of radio frequency signals and a plurality of transceiver antennas 22 of the radio frequency signals.

Within the scope of the present treatise, by the term SIMO (Single Input Multiple Output) is meant the particular communication sub-system with MIMO protocol for communicating radio frequency signals over the air between a single transceiver antenna and a plurality of transceiver antennas.

According to the invention, the device 20 comprises:

- an input port 23 operatively connectable to an input antenna 24 adapted to communicate with the single transceiver antenna 21. Preferably, the input port 23 is made of a suitable connector which allows the physical connection to the input antenna 24;
- a plurality of output ports 25 each of which operatively connectable to each of the receiver antennas 22;
- processing means 26 of the radio frequency signals operatively connected to the input port 23 and to the output ports 25 and adapted to process the radio frequency signals coming from the transceiver antenna 21 and received by the input antenna 24 to obtain a plurality of output signals which are sent, in turn, to the plurality of transceiver antennas 22.

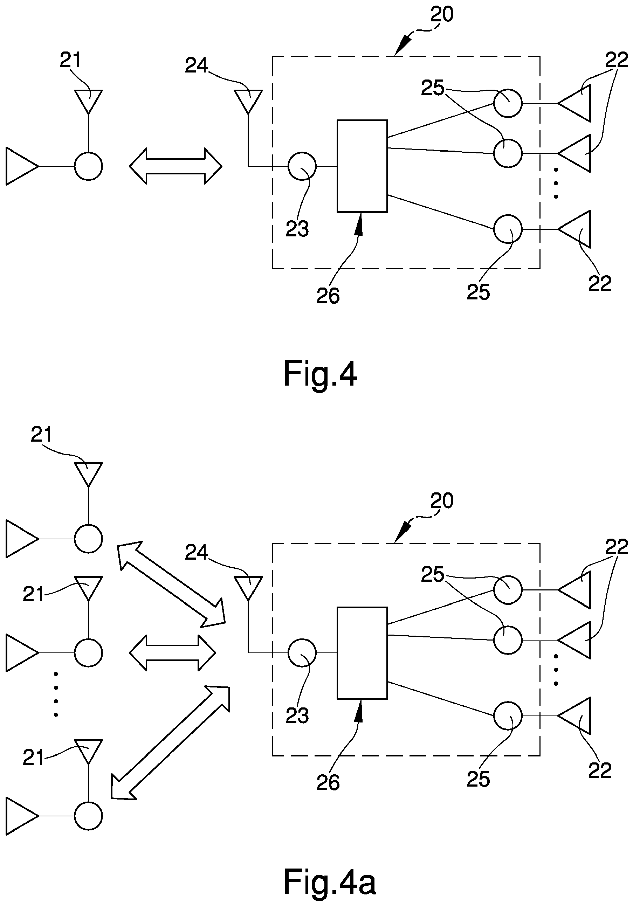

An alternative embodiment, shown in Figure 4a, cannot however be ruled out wherein each of the output ports 25 of the device 20 are operatively connected to a plurality of transceiver antennas 22, while the input connector 23 communicates over the air by means of the input antenna 24 with a plurality of transceiver antennas 21.

The processing means 26 comprise dividing means 27 operatively connected to the input port 23 and adapted to divide the radio frequency signals received by the input antenna 24 into a plurality of replicas of the radio frequency signals themselves.

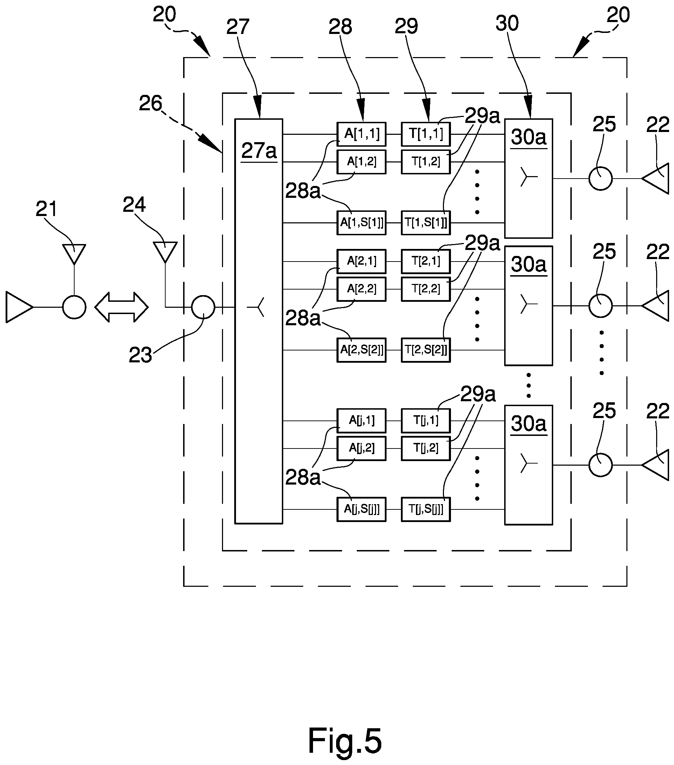

In the preferred embodiment shown in Figure 5, the dividing means 27 comprise a single dividing unit 27a operatively connected to the input port 23.

More in detail, the dividing unit 27a is of the type of a band signal splitter, or "power splitter", adapted to split the power of the radio frequency signals received by the input antenna 24, communicating with the transmission antenna 21, into a plurality of replicas of the radio frequency signals themselves.

Such number of replicas coincides with the number of receiver antennas 22 which are operatively connected to the output ports 25 of the device 20.

The processing means 26 comprise:

- attenuator means 28 operatively connected to the dividing means 27 and adapted to attenuate the intensity of the signal of each of the replicas. In the preferred embodiment shown in the figures, the attenuator means 28 comprise a plurality of attenuator units 28a, each of which is operatively connected to the dividing unit 27a and is adapted to attenuate the intensity of the signal of each of the replicas obtained by means of the dividing unit 27a; and
- retarding means 29 operatively connected to the attenuator means 28 and adapted to introduce a delay time to the signal of each of the replicas. More in detail, the retarding means 29 comprise a plurality of retarding units 29a, each of which is operatively connected to the respective attenuator unit 28a and is adapted to introduce a different delay time to the signals of each of the replicas.

Alternative embodiments cannot however be ruled out wherein the attenuation of the signals and the delay time of the replicas of the radio frequency signals are done by means of processing means of different type.

Within the scope of the present treatise, the attenuator means 28 and the retarding means 29 of each of the replicas of the radio frequency signals received by the single transceiver antenna 21 are adapted to the introduction of an attenuation, and delay correlated with it, characteristic to each single replica of the radio frequency signals.

Each of the replicas is expressible with the equation:

$$z[j] = \sum_{n[j]=1}^{S[j]} A\big[j, n[j]\big]\, T\big[j, n[j]\big]; S[j] \to \infty$$

where:

$$A\big[j, n[j]\big] = Az(n)_j; con\ j = 1, \dots, N;$$

$$T\big[j, n[j]\big] = e^{-j\omega Tz(n)_j}; con\ j = 1, \dots, N;$$

wherein:

$$A\big[j, n[j]\big] \in [-\infty; 0];\ T\big[j, n[j]\big] \in [0; +\infty];\ S[j] \in [1; +\infty]$$

In particular, the term $Tz(n)_j$ represents a delay expressible as multiple of the wave length $\lambda$: $Tz(n)_j = \dfrac{nM_j\lambda}{c}$, wherein $M_j$ is a multiplicative suitably chosen and dependent on the single input signal at the j-th input port 23.

The following is therefore obtained:

$A[j,n[j]] = Az(n)_j$, which represents a linear and variable attenuation on the single n-th path of each attenuator unit 28a; and $T\big[j, n[j]\big] = e^{-j\omega\frac{nM_j\lambda}{c}}$,

which represents a delay dependent on the wave length $\lambda$ variable on the single n-th path of each retarding unit 29a.

The processing means 26 comprise recombining means 30 of the replicas of the radio frequency signals operatively connected to the retarding means 29 and to the plurality of transceiver antennas 22 and adapted to recombine the replicas of the attenuated and delayed radio frequency signals to obtain the plurality of output signals.

Each of the output signals is in turn sent to each of the transceiver antennas 22, respectively.

Preferably, the recombining means 30 comprise a plurality of recombining units 30a each of which having a plurality of inputs operatively connected to each retarding unit 29a of the replicas of the radio frequency signals.

More in detail, the recombining unit 30a is of the type of a "power combiner" adapted to couple the powers of the replicas of the attenuated and delayed radio frequency signals z[j] to obtain a single radio frequency output signal which is then transmitted to the respective transceiver antenna 22.

In other words, each of the output signals, obtained by recombining the plurality of replicas of the radio frequency signals, is transmitted by the input antenna 24 to one of the transceiver antennas 22, respectively.

By means of the dividing means 27, S[j]-th replicas of the input radio frequency signals are obtained, wherein each replica is suitably attenuated and delayed by means of the respective attenuator units 9a and retarding units 10a to obtain attenuated and delayed radio frequency signals z[j], so as to best simulate the channel.

By making an increasingly higher number of replicas for each branch, i.e., assuming S[j] tending to the infinite, a model is obtained which is increasingly more approximable to the real channel.

Assuming as significant only the contributions closest to the direct path, S[j] can be assumed equal to a number of units.

Alternative embodiments cannot however be ruled out wherein the processing means 26 are adapted to process radio frequency signals coming from the plurality of transceiver antennas 22 to obtain a single output signal adapted to be transmitted by the input antenna 24 towards the single transceiver antenna 21. Such device 20 can be passive, i.e., without a power supply of its own and have insertion losses which vary according to the number of receiver antennas.

An alternative embodiment cannot however be ruled out shown in Figure 8 wherein the device 20 is active, i.e., has its own power supply and permits eliminating the insertion losses and obtaining a greater unit gain.

To eliminate such insertion losses introduced by the dividing unit 27a and by the recombining units 30a, the dividing unit and the recombining units themselves must switch in a high-frequency synchronous way on the various branches by means, e.g., of a high-frequency micro switch.

In particular, the dividing unit 27a must produce a sampled replica of the input signal $x_k$ on the various attenuator units 28a and retarding units 29a.

In the same way, the recombining units 30a, e.g., of the type of a high-frequency micro switch and a low-pass and/or band-pass filter connected in cascade to the micro switch, must recombine the contributions attenuated and delayed on the various branches in a synchronized way with respect to the dividing unit 27a.

Usefully, the device 20 comprises a control device 31 operatively connected to the dividing unit 27a and to the recombining units 30a and adapted to synchronize the dividing unit itself and the recombining units themselves, taking into account the delay times introduced by the phasors on the various branches.

Preferably, the control device 31 is of the type of a micro controller.

The switching or sampling frequency $f_c$ is determined by the bandwidth B characteristic to each single signal $x_k(t)$ on the basis of the principle of Nyquist according to which:

$$f_c > 2B$$

Usefully, the device 20 comprises an amplifier device 32, connected in cascade to each of the recombining units 30a and adapted to provide an alternate amplification to the output signals inasmuch as without frequency duplexing. Preferably, the amplifier device 32 is of the type of a bidirectional amplifier. Furthermore, the present invention relates to a system 40 for the complete radio communication with MIMO protocol between a first plurality of transceiver antennas 41 and a second plurality of transceiver antennas 42.

Within the scope of the present treatise, by the term MIMO (Multiple Input Multiple Output) is meant the particular bidirectional radio communication system of radio frequency signals over the air between a plurality of transceiver antennas and a plurality of transceiver antennas.

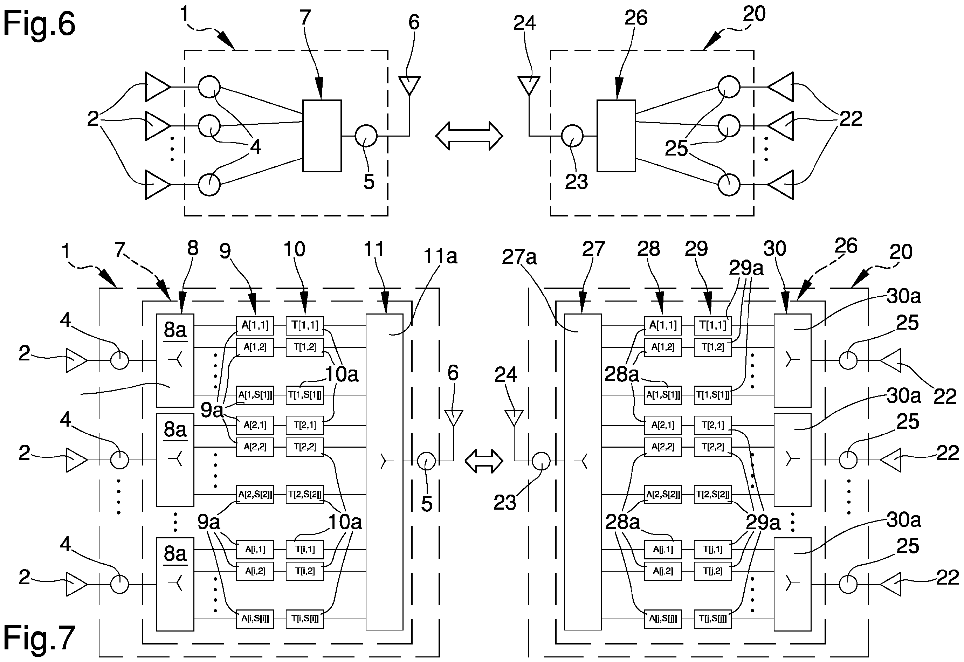

According to the invention, the system 40 schematically shown in the Figures 6 and 7 comprises:

- a first device 1 for the radio communication operatively connectable to the first plurality of transceiver antennas 41. The first device 1 has the previously described characteristics; and
- a second device 42 for the radio communication operatively connectable to the second plurality of transceiver antennas 42. The second device 20 has the previously described characteristics.

In particular, the input ports 4 of the device 1 are operatively connected to the first plurality of transceiver antennas 41 and the output ports 25 of the second device 20 are operatively connected to the second plurality of transceiver antennas 42.

Usefully, the output port 5 and the input port 23 are operatively connectable to the output antenna 6 and to the input antenna 24 respectively.

More in detail, the output antenna 6 and the input antenna 24 are adapted to communicate with one another for the transmission of the radio frequency signals from the first plurality of transceiver antennas 41 to the second plurality of transceiver antennas 42.

In this respect, alternative embodiments cannot be ruled out wherein the processing means 7 of the first device 1 and the processing means 26 of the second device 20 are adapted to suitably process the radio frequency signals coming from the second plurality of transceiver antennas 42 for the transmission of the radio frequency signals themselves towards the first plurality of transceiver antennas 41.

It has in practice been ascertained that the described invention achieves the intended object and in particular, the fact is underlined that in the indoor environments, by means of the MIMO radio communication system made, the MIMO technology can be applied in the DAS systems realizing a single-antenna single distribution placing the MISO radio communication device in communication with remote apparatuses equipped with MIMO technology and provided with transceiver antennas communicating with the output connector of the MISO radio communication device itself.

At the same time, in the outdoor environments, e.g., in the radio communication between point-to-point or point-to-multipoint radio links, it is possible to update the old existing SISO radio communication systems with the new radio communication systems with MIMO protocol made without having to replace the antennas of the SISO systems already installed in high-altitude places, e.g., on mountain peaks, and the relative cabling.

Furthermore, such radio communication system with MIMO protocol permits creating MIMO radio links between a plurality of transmission antennas and a plurality of receiver antennas using a single antenna equipped with single polarity.

**Claims**

1. Device (1) for the radio communication with MIMO protocol between a plurality of transceiver antennas (2) of radio frequency signals and a single transceiver antenna (3) of said radio frequency signals, the device comprises:

   - a plurality of input ports (4) operatively connected to said plurality of transceiver antennas (2);
   - an output port (5) operatively connected to an output antenna (6) adapted to communicate with said single transceiver antenna (3);
   - processing means (7) operatively connected to said input ports (4) and to said output port (5) and configured to process said radio frequency signals coming from said plurality of transceiver antennas (2) to obtain at least one output signal adapted to be transmitted from said output antenna (6) towards said single transceiver antenna (3), wherein said processing means (7) comprise:
   - dividing means (8) operatively connected to each of said input ports (4) and adapted to divide each of said radio frequency signals coming from each of said transceiver antennas (2) into a plurality of replicas of said radio frequency signals;
   - attenuator means (9) operatively connected to said dividing means (8) and adapted to attenuate the intensity of the signal of each of said replicas;
   - retarding means (10) operatively connected to said attenuator means (9) and adapted to introduce a delay time to the signal of each of said replicas;
   - recombining means (11) operatively connected to said retarding means (10) and to said output antenna (6) and adapted to recombine said replicas of each of said attenuated and delayed radio frequency signals to obtain said output signal.

2. Device (20) for the radio communication with MIMO protocol between a single transceiver antenna (21) for radio frequency signals and a plurality of transceiver antennas (22) of said radio frequency signals, the device comprises:

   - an input port (23) operatively connected to an input antenna (24) adapted to communicate with said single transceiver antenna (21);
   - a plurality of output ports (25) operatively connected to said plurality of transceiver antennas (22);
   - processing means (26) of said radio frequency signals, operatively connected to said input port (23) and to said output ports (25) and configured to process said radio frequency signals coming from said single transceiver antenna (21) and received by said input antenna (24) to obtain a plurality of output signals adapted to be sent to said plurality of transceiver antennas (22), wherein said processing means (26) comprise:

- dividing means (27) operatively connected to said input port (23) and adapted to divide said radio frequency signals received by said input antenna (24) into a plurality of replicas of said radio frequency signals;
- attenuator means (28) operatively connected to said dividing means (27) and adapted to attenuate the intensity of the signal of each of said replicas;
- retarding means (29) operatively connected to said attenuator means (28) and adapted to introduce a delay time to the signal of each of said replicas;
- recombining means (30) of said replicas of said radio frequency signal operatively connected to said retarding means (29) and to said plurality of transceiver antennas (22) and adapted to recombine said replicas of said attenuated and delayed radio frequency signals to obtain said plurality of output signals, each of said output signals being sent to each of said transceiver antennas (22) respectively.

3. System (40) for the radio communication with MIMO protocol between a first plurality of transceiver antennas (41) and a second plurality of transceiver antennas (42) comprising:

- at least one device (1) according to claim 1 operatively connected to said first plurality of transceiver antennas (41);
- at least one device (20) according to claim 2 operatively connected to said second plurality of transceiver antennas (42);
said output port (5) and said input port (23) being operatively connected to said output antenna (6) and to said input antenna (24) respectively, said output antenna (6) and said input antenna (24) being adapted to communicate with one another for the transmission of said radio frequency signals from said first plurality of transceiver antennas (41) to said second plurality of transceiver antennas (42).

**Patentansprüche**

1. Vorrichtung (1) für die Funkkommunikation mit MIMO-Protokoll zwischen einer Vielzahl von Transceiver-Antennen (2) von Funkfrequenzsignalen und einer einzelnen Transceiver-Antenne (3) der Funkfrequenzsignale, wobei die Vorrichtung umfasst:

- eine Vielzahl von Eingangsports (4), die operativ mit der Vielzahl von Transceiver-Antennen (2) verbunden sind;
- einen Ausgangsport (5), der operativ mit einer Ausgangsantenne (6) verbunden ist, die ausgelegt ist, um mit der einzelnen Transceiver-Antenne (3) zu kommunizieren;
- Verarbeitungsmittel (7), die operativ mit den Eingangsports (4) und mit dem Ausgangsport (5) verbunden und so konfiguriert sind, dass sie die Funkfrequenzsignale verarbeiten, die von der Vielzahl von Transceiver-Antennen (2) kommen, um mindestens ein Ausgangssignal zu erhalten, das angepasst ist, um von der Ausgangsantenne (6) zu der einzelnen Transceiver-Antenne (3) übertragen zu werden, wobei die Verarbeitungsmittel (7) umfassen:
- Teilungsmittel (8), die betriebsmäßig mit jedem der Eingangsports (4) verbunden und so ausgebildet sind, dass sie jedes der Funkfrequenzsignale, die von jeder der Transceiver-Antennen (2) kommen, in eine Vielzahl von Nachbildungen der Funkfrequenzsignale teilen;
- Dämpfungsmittel (9), die mit den Teilungsmitteln (8) betriebsmäßig verbunden sind und dazu ausgelegt sind, die Intensität des Signals jeder der Nachbildungen zu dämpfen;
- Verzögerungsmittel (10), die operativ mit den Dämpfungsmitteln (9) verbunden sind und geeignet sind, eine Verzögerungszeit in das Signal jeder der Nachbildungen einzuführen;
- Rekombinationsmittel (11), die betriebsmäßig mit der Verzögerungseinrichtung (10) und der Ausgangsantenne (6) verbunden und so ausgebildet sind, dass sie die Nachbildungen jedes der gedämpften und verzögerten Funkfrequenzsignale rekombinieren, um das Ausgangssignal zu erhalten.

2. Vorrichtung (20) für die Funkkommunikation mit MIMO-Protokoll zwischen einer einzelnen Transceiver-Antenne (21) für Funkfrequenzsignale und einer Vielzahl von Transceiver-Antennen (22) der Funkfrequenzsignale, wobei die Vorrichtung umfasst:

- einen Eingangsport (23), der operativ mit einer Eingangsantenne (24) verbunden ist, die ausgelegt ist, um mit der einzelnen Transceiver-Antenne (21) zu kommunizieren;
- eine Vielzahl von Ausgangsports (25), die operativ mit der Vielzahl von Transceiver-Antennen (22) verbunden sind;
- Verarbeitungsmittel (26) der Funkfrequenzsignale, die operativ mit dem Eingangsport (23) und den Ausgangsports (25) verbunden und so konfiguriert sind, dass sie die von der einzelnen Transceiver-Antenne (21) kommenden und von der Eingangsantenne (24) empfangenen Funkfrequenzsignale verarbeiten, um eine Vielzahl von Ausgangssignalen zu erhalten, die angepasst sind, um an die Vielzahl von Transceiver-Antennen (22) gesendet werden zu können, wobei die Verarbeitungsmittel (26) umfassen:

- Teilungsmittel (27), die operativ mit dem Eingangsport (23) verbunden sind und so ausgelegt sind, dass sie die von der Eingangsantenne (24) empfangenen Funkfrequenzsignale in eine Vielzahl von Nachbildungen der Funkfrequenzsignale teilen;
- Dämpfungsmittel (28), die operativ mit den Teilungsmitteln (27) verbunden und so ausgebildet sind, dass sie die Intensität des Signals jeder der Nachbildungen dämpfen;
- Verzögerungsmittel (29), die operativ mit den Dämpfungsmitteln (28) verbunden sind und geeignet sind, eine Verzögerungszeit in das Signal jeder der Nachbildungen einzuführen;
- Rekombinationsmittel (30) der Nachbildungen des Funkfrequenzsignals, die operativ mit den Verzögerungsmitteln (29) und mit der Vielzahl von Transceiver-Antennen (22) verbunden und so ausgebildet sind, dass sie die Nachbildungen der gedämpften und verzögerten Funkfrequenzsignale rekombinieren, um die Vielzahl von Ausgangssignalen zu erhalten, wobei jedes der Ausgangssignale jeweils zu jeder der Transceiver-Antennen (22) gesendet wird.

3. System (40) für die Funkkommunikation mit MIMO-Protokoll zwischen einer ersten Vielzahl von Transceiver-Antennen (41) und einer zweiten Vielzahl von Transceiver-Antennen (42), umfassend:

- mindestens eine Vorrichtung (1) nach Anspruch 1, die operativ mit der ersten Vielzahl von Transceiver-Antennen (41) verbunden ist;
- mindestens eine Vorrichtung (20) nach Anspruch 2, die operativ mit der zweiten Vielzahl von Transceiver-Antennen (42) verbunden ist;
wobei der Ausgangsport (5) und der Eingangsport (23) operativ mit der Ausgangsantenne (6) bzw. mit der Eingangsantenne (24) verbunden sind, wobei die Ausgangsantenne (6) und die Eingangsantenne (24) ausgelegt sind, um miteinander für die Übertragung der Funkfrequenzsignale von der ersten Vielzahl von Transceiver-Antennen (41) zu der zweiten Vielzahl von Transceiver-Antennen (42) zu kommunizieren.

## Revendications

1. Dispositif (1) pour la communication radioélectrique avec un protocole MIMO entre une pluralité d'antennes d'émetteur-récepteur (2) de signaux radioélectriques et une unique antenne d'émetteur-récepteur (3) desdits signaux radioélectriques, le dispositif comprend :

- une pluralité de ports d'entrée (4) connectés en fonctionnement à ladite pluralité d'antennes d'émetteur-récepteur (2) ;
- un port de sortie (5) connecté en fonctionnement à une antenne de sortie (6) adaptée pour communiquer avec ladite unique antenne d'émetteur-récepteur (3) ;
- des moyens de traitement (7) connectés en fonctionnement auxdits ports d'entrée (4) et audit port de sortie (5) et configurés pour traiter lesdits signaux radioélectriques provenant de ladite pluralité d'antennes d'émetteur-récepteur (2) pour obtenir au moins un signal de sortie adapté pour être transmis à partir de ladite antenne de sortie (6) vers ladite unique antenne d'émetteur-récepteur (3), dans lequel lesdits moyens de traitement (7) comprennent :
- des moyens de division (8) connectés en fonctionnement à chacun desdits ports d'entrée (4) et adaptés pour diviser chacun desdits signaux radioélectriques provenant de chacune desdites antennes d'émetteur-récepteur (2) en une pluralité de répliques desdits signaux radioélectriques ;
- des moyens d'atténuation (9) connectés en fonctionnement auxdits moyens de division (8) et adaptés pour atténuer l'intensité du signal de chacune desdites répliques ;
- des moyens de retardement (10) connectés en fonctionnement auxdits moyens d'atténuation (9) et adaptés pour introduire un retard dans le signal de chacune desdites répliques ;
- des moyens de recombinaison (11) connectés en fonctionnement auxdits moyens de retardement (10) et à ladite antenne de sortie (6) et adaptés pour recombiner lesdites répliques de chacun desdits signaux radioélectriques atténués et retardés pour obtenir ledit signal de sortie.

2. Dispositif (20) pour la communication radioélectrique avec un protocole MIMO entre une unique antenne d'émetteur-récepteur (21) pour des signaux radioélectriques et une pluralité d'antennes d'émetteur-récepteur (22) desdits signaux radioélectriques, le dispositif comprend :

- un port d'entrée (23) connecté en fonctionnement à une antenne d'entrée (24) adaptée pour communiquer avec ladite unique antenne d'émetteur-récepteur (21) ;
- une pluralité de ports de sortie (25) connectés en fonctionnement à ladite pluralité d'antennes d'émetteur-récepteur (22) ;
- des moyens de traitement (26) desdits signaux radioélectriques, connectés en fonctionnement audit port d'entrée (23) et auxdits ports de sortie (25) et configurés pour traiter lesdits signaux radioélectriques provenant de ladite unique antenne d'émetteur-récepteur (21) et reçus par ladite antenne d'entrée (24) pour obtenir une pluralité de signaux de sortie adaptés pour être envoyés à ladite pluralité d'antennes d'émetteur-récepteur (22), dans lequel lesdits moyens de traitement (26) comprennent :
- des moyens de division (27) connectés en fonctionnement audit port d'entrée (23) et adaptés pour diviser lesdits signaux radioélectriques reçus par ladite antenne d'entrée (24) en une pluralité de répliques desdits signaux radioélectriques ;
- des moyens d'atténuation (28) connectés en fonctionnement auxdits moyens de division (27) et adaptés pour atténuer l'intensité du signal de chacune desdites répliques ;
- des moyens de retardement (29) connectés en fonctionnement auxdits moyens d'atténuation (28) et adaptés pour introduire un retard dans le signal de chacune desdites répliques ;
- des moyens de recombinaison (30) desdites répliques du signal radioélectriques, connectés en fonctionnement auxdits moyens de retardement (29) et à ladite pluralité d'antennes d'émetteur-récepteur (22) et adaptés pour recombiner lesdites répliques desdits signaux radioélectriques atténués et retardés pour obtenir ladite pluralité de signaux de sortie, chacun desdits signaux de sortie étant envoyé respectivement à chacune desdites antennes d'émetteur-récepteur (22).

3. Système (40) pour la communication radioélectrique avec un protocole MIMO entre une première pluralité d'antennes d'émetteur-récepteur (41) et une seconde pluralité d'antennes d'émetteur-récepteur (42) comprenant :

- au moins un dispositif (1) selon la revendication 1 connecté en fonctionnement à ladite première pluralité d'antennes d'émetteur-récepteur (41) ;
- au moins un dispositif (20) selon la revendication 2 connecté en fonctionnement à ladite seconde pluralité d'antennes d'émetteur-récepteur (42) ;
ledit port de sortie (5) et ledit port d'entrée (23) étant connectés en fonctionnement respectivement à ladite antenne de sortie (6) et à ladite antenne d'entrée (24), ladite antenne de sortie (6) et ladite antenne d'entrée (24) étant adaptées pour communiquer l'une avec l'autre pour la transmission desdits signaux radioélectriques de ladite première pluralité d'antennes d'émetteur-récepteur (41) à ladite seconde pluralité d'antennes d'émetteur-récepteur (42).

Fig.1

Fig.2

Fig.2a

Fig.3

Fig.4

Fig.4a

Fig.5

Fig.6

Fig.7

EP 3 394 989 B1

Fig.8

EP 3 394 989 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1768284 A1
- US 8374273 B1